# EUROPEAN PATENT APPLICATION

(11) **EP 3 139 695 A1**
(43) Date of publication of application: **08.03.2017**
(21) Application number: 16194455.8
(22) Date of filing: 05.02.2009
(51) Int. Cl.: H04W 76/02, H04W 88/04, H04B 7/04

(54) **METHOD AND APPARATUS FOR FACILITATING DISTRIBUTED PROCESSING IN MULTIPLE-ANTENNA WIRELESS COMMUNICATION**

(30) Priority: 25.06.2008 US 75691 P; 05.08.2008 US 86441 P; 14.01.2009 US 353848
(62) Divisional of application: 09789453.9
(71) Applicant: QUALCOMM Incorporated, San Diego CA 92121-1714 (US)
(72) Inventor: CHAKRABARTI, Arnab, San Diego, CA 92121-1714 (US); STAMOULIS, Anastasios, San Diego, CA 92121-1714 (US); LIN, Dexu, San Diego, CA 92121-1714 (US); YAZDI, Kambiz Azarian, San Diego, CA 92121-1714 (US); JI, Tingfang, San Diego, CA 92121-1714 (US)
(74) Representative: Harrison, Christopher John

(57) **Abstract**

A method for facilitating multiple-antenna wireless communication, comprising:
employing a wired or wireless communication interface to obtain data identifying a WCD and a potential wireless partner of the WCD; employing a processor to generate indexing parameters facilitating distributed processing for multiple-antenna communication for the WCD or wireless partner; mapping the respective indexing parameters to respective instructions for independent implementation of the communication at the WCD or wireless partner; identifying respective wireless channels and resources for the WCD or wireless partner to be employed in implementing the communication; and employing the communication interface to forward the indexing parameters to the WCD.

## Description

### Claim of Priority under 35 U.S.C. §119

The present Application for Patent claims priority to:
U.S. Provisional Application No. 61/086,441 entitled RELAY ANTENNA INDEXING TECHNIQUES FOR ANTENNA SHARING AMONG USERS filed August 5, 2008 and
U.S. Provisional Application No. 61/075,691 entitled MOBILE DEVICE RELAY filed June 25, 2008, each of which are assigned to the assignee hereof and hereby expressly incorporated by reference herein.

### BACKGROUND

### I. Field

The following relates generally to wireless communication, and more specifically to distributed multiple-antenna wireless communication.

### II. Background

Wireless communication systems are widely deployed to provide various types of communication and communication content such as, *e*.*g*., voice communication, data communication and content, and so on. Typical wireless communication systems can be multiple-access systems for supporting communication with multiple users by sharing available system resources (e.g., bandwidth, transmit power). Examples of such multiple-access systems can include code division multiple access (CDMA) systems, time division multiple access (TDMA) systems, frequency division multiple access (FDMA) systems, orthogonal frequency division multiple access (OFDMA) systems, and the like.

Generally, wireless multiple-access communication systems can concurrently support communication for multiple user terminals. Mobile devices respectively can communicate with one or more base stations *via* transmissions on forward and reverse links. The forward link (or downlink) refers to a communication link from base stations to user terminals, and the reverse link (or uplink) refers to a communication link from user terminals to base stations. Further, communications between user terminals and base stations can be established *via* single-input single-output (SISO) systems, multiple-input single-output (MISO) systems, multiple-input multiple-output (MIMO) systems, and so forth.

In addition to the foregoing, *ad*-*hoc* wireless communication networks enable communication devices to transmit, or receive information while on the move and without the need for traditional base stations. These communication networks can be communicatively coupled to other public or private networks, for example *via* wired or wireless access points, in order to facilitate transfer of information to and from user terminals. Such *ad-hoc* communication networks typically include a plurality of access terminals (*e.g*., mobile communication devices, mobile phones, wireless user terminals), communicating in a peer-to-peer fashion. The communication networks can also include beacon points that emit strong signals to facilitate the peer-to-peer communication; for example, emitted beacons can contain timing information to aid in timing synchronization for transmission and reception of wireless signals. These beacon points are positioned to provide wide area coverage as respective access terminals travel within and across different coverage areas.

In some wireless communication systems, relay transceivers are employed to facilitate communication between a source and destination node. The relay transceivers can operate in various configurations. Examples include re-transmission (*e.g.,* receive, filter, and transmit a received signal), amplify and forward *(e.g.,* receive, filter, amplify and transmit the signal), decode and forward (*e,g.,* receive, decode, process, encode and transmit the signal), compress and forward *(e.g.,* receive, filter, compress and forward the signal), and so forth. Other examples can exist based on additional processing or filtering implemented at the relay transceiver.

In general, relays can provide additional utility in wireless communications. For instance, a relay can be employed to increase range of communication between source and destination devices. Additionally, multiple relays can be employed, such as in a wireless repeater arrangement, to further increase the communication range. In some circumstances, these relays can be fixed points (*e.g.,* planned base stations) and in others, the relays can comprise mobile terminals. For instance, where an access terminal or user terminal is configured to receive and transmit on both uplink and downlink channels, the access terminal can act as a relay for another wireless node. Because relays can be fixed nodes or mobile nodes, relay networks can provide a great deal of flexibility and customization in wireless communications, potentially resulting in lower interference, improved range and even reduced infrastructure costs.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In some aspects of the subject disclosure, peer-to-peer (P-P) wireless communication is employed among a set of user terminals (UTs) to implement distributed, multi-antenna communication. By way of example, a relay link can be established between one or more P-P UTs. The link can be utilized to distribute an indexing parameter to a remote UT, as well as traffic data for the multi-antenna communication. The indexing parameter can identify a set of index-specific instructions configured for a particular wireless device. Based on the instructions and indexing parameter, such wireless device can separately compute and transmit, or receive and decode, a stream for the multi-antenna communication. Thus, in the above example, a P-P link between UTs can be employed to implement increased throughput and reduced interference benefits of multi-antenna communication for unplanned configurations of mobile devices.

In one or more other aspects, remote transmitter indexing is provided for distributed multi-antenna related processing for P-P and access point communication. Such access points can comprise cellular base stations, wireless routers, wireless interoperability for microwave access (WiMAX) access points, and so forth. As above, indexing can be employed to distinguish respective transmitters, whether P-P devices *(e.g.,* user terminals) or fixed access points, or to identify respective sets of index-specific instructions suitable for implementing the multi-antenna communication among the P-P and fixed access point devices.

According to other aspects of the subject disclosure, mobile network components can be configured to facilitate multi-antenna communication for a set of P-P UTs. A mobile network can obtain information identifying a UT and at least one P-P partner of the UT. Indexing parameters can be generated for the UT and P-P partner and associated with respective sets of instructions for the multi-antenna communication. The parameters can be forwarded to the UTs, optionally with the instructions, to enable the UTs to differentiate the respective sets of instructions. Once identified, the UT or P-P partner can employ an appropriate set of instructions to facilitate multi-antenna transmission or reception, and obtain the communication benefits associated there with.

In one or more other aspects of the subject disclosure, provided is a method of wireless communication. The method can comprise employing at least one communication processor at a wireless communication device (WCD) to implement instructions for multi-antenna communication. The instructions can comprise forming a wireless communication channel with a second wireless device. Additionally, the instructions can comprise establishing a relay link over the channel to communicate a parameter, the parameter indexes an antenna of the WCD or the second wireless device to implement distributed multiple-antenna transmission or reception. In addition to the foregoing, the method can comprise employing memory at the WCD to store the parameter or the instructions.

In addition to the foregoing, disclosed is an apparatus for multiple-input or multiple-output wireless communication. The apparatus can comprise memory for storing processing instructions or parameters to implement distributed multiple-antenna communication. Additionally, the apparatus can comprise an antenna for transmitting or receiving wireless data. The apparatus can further comprise a communication processor for executing the instructions based on the parameters to form a wireless communication channel between the apparatus and a wireless device and convey a parameter to the wireless device, for indexing the antenna or an antenna of the wireless device to facilitate distributed processing for the multiple-antenna communication.

In other aspects of the subject disclosure, provided is an apparatus for wireless communication. The apparatus can comprise means for employing at least one communication processor to implement the following components of a WCD: means for forming a wireless communication channel with a wireless device and means for establishing a relay link over the channel to convey a parameter; the parameter indexes an antenna of the WCD or the wireless device to implement distributed multiple-antenna transmission or reception. In addition to the foregoing, the apparatus can comprise means for storing the parameter or the instructions.

According to additional aspects of the subject disclosure, provided is a processor configured for wireless communication. The processor can comprise a first module for forcing a wireless communication channel with a wireless device. Moreover, the processor can comprise a second module for establishing a relay link over the channel to communicate a parameter; the parameter indexes an antenna associated with the processor or with the wireless device to implement distributed multiple-antenna transmission or reception. Furthermore, the processor can comprise a third module for storing the parameter or the instructions in memory.

According to still other aspects of the subject disclosure, provided is a computer program product comprising a computer-readable medium. The computer-readable medium can comprise a first set of codes for causing a computer to form a wireless communication channel with a wireless device. In addition, the computer-readable medium can comprise a second set of codes for causing the computer to establish a relay link over the channel to convey a parameter; the parameter indexes an antenna associated with the computer or with the wireless device to implement distributed multiple-antenna transmission or reception. Furthermore, the computer-readable medium can comprise a third set of codes for causing the computer to store the parameter or the instructions.

In addition to the foregoing, disclosed is a method for facilitating multiple-antenna wireless communication. The method can comprise employing a wired or wireless communication interface to obtain data identifying a WCD and a potential wireless partner of the WCD. Furthermore, the method can comprise employing a processor to generate indexing parameters facilitating distributed processing for multiple-antenna communication for the WCD or wireless partner. Additionally, the method can comprise employing the communication interface to forward the indexing parameters to the WCD.

According to one or more other aspects, disclosed is an apparatus for facilitating multiple-antenna wireless communication. The apparatus can comprise a communication interface that obtains a message that identifies a WCD and a potential wireless partner of the WCD. Furthermore, the apparatus can comprise a distributed control module that generates indexing parameters facilitating distributed processing for multiple-antenna communication for the WCD and wireless partner; the apparatus employs the communication interface to transmit the indexing parameters to the WCD or wireless partner.

According to further aspects, disclosed is an apparatus for facilitating multiple-antenna wireless communication. The apparatus can comprise means for obtaining data identifying a WCD and a potential wireless partner of the WCD. Furthermore, the apparatus can comprise means for generating indexing parameters facilitating distributed processing for multiple-antenna communication for the WCD or wireless partner. In addition to the foregoing, the apparatus can comprise means for forwarding the indexing parameters to the WCD.

In one or more additional aspects, provided is a processor for facilitating multiple-antenna wireless communication. The processor can comprise a first module for obtaining data identifying a WCD and a potential wireless partner of the WCD. Furthermore, the processor can comprise a second module for generating indexing parameters facilitating distributed processing for multiple-antenna communication for the WCD or wireless partner. Additionally, the processor can comprise a third module for forwarding the indexing parameters to the WCD.

According to still other aspects of the subject disclosure, provided is a computer program product, comprising a computer-readable medium. The computer-readable medium can comprise a first set of codes for causing a computer to obtain data identifying a WCD and a potential wireless partner of the WCD. The computer-readable medium can further comprise a second set of codes for causing the computer to generate indexing parameters facilitating distributed processing for multiple-antenna communication for the WCD or wireless partner. Further to the above, the computer-readable medium can comprise a third set of codes for causing the computer to forward the indexing parameters to the WCD.

To the accomplishment of the foregoing and related ends, the one or more aspects comprise the features hereinafter fully described and particularly pointed out in the claims. The following description and the annexed drawings set forth in detail certain illustrative aspects of the one or more aspects. These aspects are indicative, however, of but a few of the various ways in which the principles of various aspects can be employed and the described aspects are intended to include all such aspects and their equivalents.

### BRIEF DESCRIPTION OF THE DRAWINGS

**Fig. 1** depicts a block diagram of a sample wireless relay configuration according to aspects of the subject disclosure.
**Fig. 2** illustrates a block diagram of a sample peer-to-peer (P-P) wireless communication environment according to further aspects of the subject disclosure.
**Fig. 3** depicts a block diagram of an example system providing multi-antenna wireless communication employing a set of P-P user terminals (UTs).
**Fig. 4** illustrates a block diagram of an example system that provides distributed multi-antenna communication based on distributed processing.
**Fig. 5** depicts a block diagram of an example UT configured to employ P-P communication to implement multi-antenna communication according to some aspects.
**Fig. 6** illustrates a block diagram of an example base station configured to facilitate P-P multi-antenna communication according to other aspects.
**Fig. 7** illustrates a flowchart of an example methodology for providing multi-antenna P-P communication according to aspects of the subject disclosure.
**Fig. 8** depicts a flowchart of a sample methodology for implementing multi-antenna communication among a set of UTs according to further aspects.
**Fig. 9** depicts a flowchart of an example methodology for facilitating multi-antenna P-P communication according to additional aspects.
**Figs. 10** and **11** depict block diagrams of example systems for implementing and facilitating, respectively, P-P multi-antenna communications.
**Fig. 12** depicts a block diagram of an example mobile communication environment according to other aspects of the subject disclosure.
**Fig. 13** illustrates a block diagram of an example communication apparatus for employment with a mobile communication environment.
**Fig. 14** depicts a block diagram of an example P-P wireless communication arrangement according to further aspects of the subject disclosure.

### DETAILED DESCRIPTION

Various aspects are now described with reference to the drawings, wherein like reference numerals are used to refer to like elements throughout. In the following description, for purposes of explanation, numerous specific details are set forth in order to provide a thorough understanding of one or more aspects. It can be evident, however, that such aspect(s) can be practiced without these specific details. In other instances, well-known structures and devices are shown in block diagram form in order to facilitate describing one or more aspects.

In addition, various aspects of the disclosure are described below. It should be apparent that the teaching herein can be embodied in a wide variety of forms and that any specific structure and/or function disclosed herein is merely representative. Based on the teachings herein one skilled in the art should appreciate that an aspect disclosed herein can be implemented independently of any other aspects and that two or more of these aspects can be combined in various ways. For example, an apparatus can be implemented and/or a method practiced using any number of the aspects set forth herein. In addition, an apparatus can be implemented and/or a method practiced using other structure and/or functionality in addition to or other than one or more of the aspects set forth herein. As an example, many of the methods, devices, systems and apparatuses described herein are described in the context of implementing inter-sector interference avoidance for a mobile access network (AN). One skilled in the art should appreciate that similar techniques could apply to other communication environments.

Wireless communication systems implement information exchange between wireless nodes by employing various signaling mechanisms. In one instance, a base station can be employed to transmit pilot signals that establish timing sequences and identify signal source and network associated with the source, among other things. A remote wireless node, such as a user terminal (UT), can decode a pilot signal to obtain information necessary to establish basic communication with the base station. Additional data, such as a wireless frequency or set of frequencies, time slot(s), symbol codes and the like can be conveyed in control signals transmitted from the base station. This data can be utilized to establish wireless resources over which traffic data, carrying user information, such as voice communication or data communication, can be conveyed between the base station and UT.

Recent advancements in wireless technology include relay stations that transmit data between a source and destination node. Relays are nodes that receive, process and forward information from one node to another. In some cases, the relays simply forward signals to take advantage of better signal to interference and noise ratio (SINR) characteristics of relative wireless channels. For instance, where a relay has better SINR characteristics with the destination than the source has, improved communication capacity or energy efficiency can result by employing the relay. In other cases, relays can implement more advanced processing, such as filtering, amplifying, compressing, *etc.,* the signals, to achieve additional benefits from the relay.

The subject disclosure, in some aspects thereof, provides for the use of UT-cooperation to increase capacity and energy efficiency in wireless communications. One way to enable UT-cooperation is for UTs to relay wireless signals to or from other UTs to an intended destination, such as a network base station, or another UT. According to additional aspects of the subject disclosure, relaying strategies can mimic multi-antenna communication systems, and yield the benefits provided by such systems. Examples of multi-antenna communication systems include multiple input single output (MISO) systems, single input multiple output (SIMO) systems, and multiple input multiple output (MIMO) systems. In general, multi-antenna systems achieve higher communication throughput rates than single input single output (SISO) systems by transmitting suitably chosen signals concurrently from multiple transmit antennas (*e.g.*, in a SIMO system), or by suitably processing signals received from multiple receive antennas (*e.g.,* in a MISO system), or both (*e.g.*, in a MIMO system).

Communication benefits obtained from multi-antenna systems results from careful design of signals transmitted by multiple transmit antennas or careful processing of signals received at multiple receive antennas. Furthermore, the signals transmitted/processed by different antennas are not identical. Furthermore, such signals are not necessarily interchangeable. Furthermore, on the receive side, signals received at different receiver antennas are distinguished, and processed and combined appropriately, based on which antenna receives a signal and which channel the received signal is associated with. Thus, ability to distinguish various antennas facilitates the multi-antenna system.

For centralized multi-antenna communication, indexing of antennas is a relatively simple process, as each antenna is directly coupled with a common processing element, and identified by such element. Signals to be transmitted by each antenna are computed and sent to the respective antennas over fixed connections (*e.g.*, wired cable, such as Ethernet, T-1, *etc.).* For decentralized nodes (*e.g.*, a set of UTs), centralized processing is ineffective, as no fixed connection between a central processing element and respective UTs are available. Moreover, UTs are capable of roaming into and out of range of other nodes, so antenna identity is not fixed either.

Further aspects of the subject disclosure provide for implementing a multi-antenna system among peer-to-peer (P-P) UTs, optionally including one or more fixed wireless access points, fixed wireless relays, or like transceiver station. To accomplish such as system, the subject disclosure provides an indexing mechanism that enables distinction of remote antennas associated with a set of UT(s) or fixed wireless transceivers, or a subset of such antennas, communicatively coupled *via* one or more wireless channels. A set of multi-antenna communication instructions is also provided, as a function of antenna index. A transceiver *(e.g.,* UT or fixed station) utilizing the set of instructions and an index assigned thereto can identify a subset of the instructions designed for transmitting or receiving signals by a particular antenna of the multi-antenna communication system. The indexing therefore enables individual transceivers to generate or process signals independently of other transceivers in a multiple-antenna configuration (e.g., MIMO), resulting in distributed processing. Thus, the subject disclosure can avoid use of a centralized processing element and fixed antennas to implement multi-antenna communication.

It should be appreciated that various aspects described below provide examples of distributed processing for multi-antenna communication for a set of P-P devices (*e.g.*, UTs). It should be appreciated, however, that fixed access points, fixed wireless stations, fixed wireless relays, or other non P-P devices can also be employed in distributed multi-antenna communication. In some aspects, at least one UT is utilized as a relay for the multi-antenna communication, although the at least one UT is not essential to implementing the various aspects of the subject disclosure. For instance, a fixed transceiver station can act as a wireless relay for another wireless node (*e.g.,* a cellular base station), or *vice versa,* and facilitate distributed processing for multi-antenna communication for the fixed transceiver station and the other wireless node. Alternatively, or in addition, the other wireless node can act as a relay for the fixed transceiver station, facilitating the multi-antenna communication. Thus, as utilized herein, the term(s) relay or 'relay link' refer to a wireless communication arrangement where a first node (or nodes) A can act as a wireless relay for a second node(s) B, the second node(s) B can act as the wireless relay for the first node(s) A, or the first node(s) A and second node(s) B can act as wireless relays for each other.

It should also be appreciated that the first node(s) A and second node(s) B can be part of a single wireless transceiver or separate wireless transceivers. Thus, as an example of the former, a first wireless antenna (e.g., node A) and a second wireless antenna (*e.g.,* node B) of a multi-antenna mobile device can act, independently or in conjunction, as a wireless relay for one or more other wireless devices (*e.g*., other mobile phones or base stations). As an example of the latter, node A and node B can be coupled to separate UTs, to a UT and a base station, to a UT and a fixed relay station, and so on.

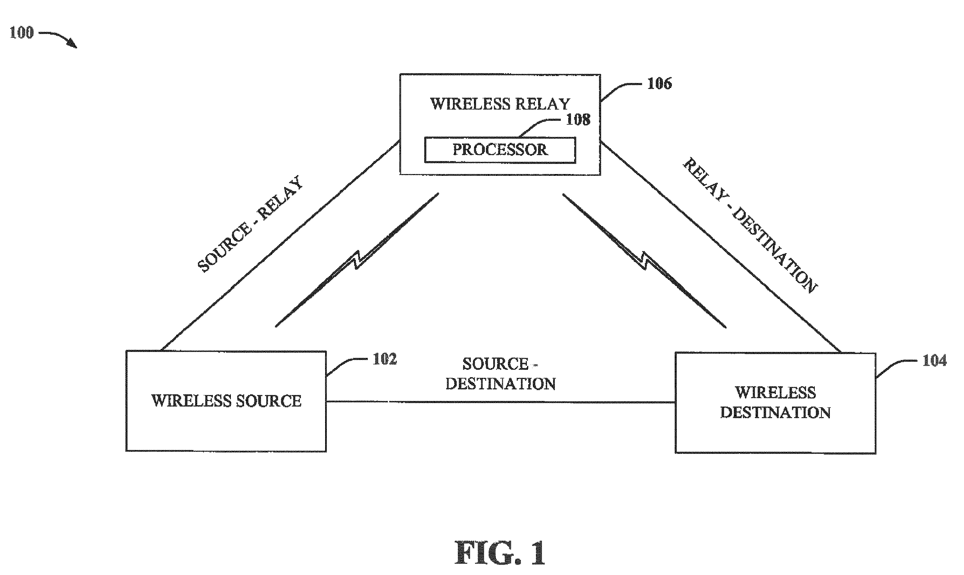

Referring now to the figures, Fig. 1 illustrates a block diagram of an example system 100 for P-P communication among UTs (102, 106). Utilizing P-P communication, a UT (106) can act as a relay for another UT (102), enabling inter-UT cooperation for source to destination wireless communication. As mobile technology has become widely used, especially in industrialized populations, larger numbers of persons subscribe to wireless communication services and utilize a UT as a personal communication device. Additionally, because people often aggregate together (*e.g.*, in families, work environments, social environments, *etc.*), and because UTs are typically portable devices, easily carried by such persons, multiple UTs are often in close proximity with each other (relative to communication ranges of the UTs). Thus, a UT (102) has a relatively high probability of being in communication range of another UT (106) at a given time. Through use of a flexible wireless protocol, and suitable hardware or software configuration, UTs (106) can engage in P-P communication with other UTs (102), and act as relays.

On forward communication links (*e.g.,* links typically employed by a base station to transmit signals to a UT), wireless channel strength can often be less than a corresponding strength of a P-P channel(s) between a set of UTs (102, 106). Such disparity in signal strength can result when at least a subset of the UTs are in close proximity, relative a distance to a forward link wireless node (*e.g.,* a base station, 104). With such an arrangement, multi-antenna communication, and benefits resulting there from, can often be obtained with the P-P UT channel on the forward link. In a reverse link situation, a source can be a UT (102) and a destination can be a base station (104). Channels from source (102) to relaying UT (106) can be stronger than channels from source (102) to the destination (104), or the relay (104) to the destination (106). Multi-antenna communication can also be achieved in such a reverse link, for instance where the destination (104) comprises multiple antennas.

Additionally, a relay node (106) can improve capacity or energy efficiency in wireless communications. Use of the relay node can depend on SINR characteristics of a source-to-relay (S-R) link, relay-to-destination (R-D) link, source-to-destination (S-D) link, or a combination thereof. As depicted at Fig. 1, source UT 102 can communicate with destination node 104 directly, or *via* relay UT 106.

Various relative channel strength scenarios can exist in the communication arrangement of system 100. In one such scenario, an S-D link can be much stronger than an S-R link or an R-D link. Direct communication between the source UT 102 and destination node 104 can be implemented effectively. However, the relay UT 106 can still provide added benefit for practical purposes. For instance, the source UT 102 and relay UT 106 can initiate a P-P channel between the UTs (102, 106). Utilizing the P-P channel, multi-antenna transmission can be implemented by the linked UTs (102, 104). where each UT transmits an independent stream of signals, comprising like traffic data, to the destination node 104. Furthermore, multi-antenna reception can be implemented by the linked UTs (102, 104), where each UT independently receives and processes signals transmitted by the destination node 104.

In another scenario, the S-R link can be much stronger than the S-D and R-D links, which are about equal in strength. In such a scenario, system 100 can resemble a 2x1 MISO channel. In a MISO channel, signals transmitted by antennas are based on knowledge of transmission information. The relay UT 106 can mimic a MISO system and decode information received from the source UT 102. Decoded information can be communication from the relay UT 106 to the destination node 104 *(e.g.,* also referred to as decode and forward protocol).

In a third scenario, the S-R link can be about equal to the R-D link, which are both significantly stronger than the S-D link. Decode and forward protocol can also be utilized in this third scenario. In some aspects, the S-D link can be ignored and the communication arrangement of system 300 can be treated as a multi-hop channel (e.g., two-hop channel).

In yet another scenario, the R-D link can be much stronger than the S-D link. Additionally, the R-D link can be of about equal strength to the S-D link. Such a scenario can resemble a 1x2 SIMO channel. A receiver (102, 106) can perform a maximal-ratio combination for signals received at multiple receiver antennas (102, 106). In mimicking a SIMO channel at relay UT 106, 'soft' information can be communicated from the source UT 102 to the relay UT 106 that is pertinent to a source to destination transmission. In some circumstances, relay to destination communication is subject to capacity limitations of a strong R-D link. Accordingly, the 'soft' information can be discretized (*e.g*., parsed into discrete units) by a processor 108 (*e.g.,* comprising a quantizer or quantization module) to a resolution that can be carried by the R-D link. It is to be appreciated that while the aforementioned aspects are discussed with specific scenarios based on a tri-node relay (*e.g.,* source, destination and one relay), additional aspects can be practiced with other configurations within the scope of the subject disclosure and appended claims (*e.g*., employing multiple relays). For example, in the second scenario resembling the 2x1 MISO channel, a source transmission can be decoded and retransmitted from multiple relays or over multiplexed channels.

MIMO systems can be a source of large throughput increases in wireless communications, depending on independence of multiple transmitted or received signals. To achieve signal independence, multiple antennas transmitting a signal can be separated in distance by at least half of a wavelength of the signals. For cellular communication, for instance, signals are commonly transmitted at substantially 1 gigahertz (GHz) or 2 GHz. Half of a wavelength for such frequencies corresponds to about 15 centimeters (cm) and 7.5cm, respectively. Due to the size of many common UTs (102, 106), a limited number of independent antennas can be incorporated into a single UT, limiting the ability to reap gains associated with MIMO communication. However, by employing P-P links between UTs (102, 106), a virtual array of antennas at nearby UTs (102, 106) can be implemented, providing independent channels and a rich scattering environment suitable for MIMO communication. Accordingly, such an arrangement can enable MIMO technology even for UTs (102, 106) having only a single antenna.

To illustrate the foregoing according to some of the above scenarios, for multi-antenna transmission (*e.g.*, MISO or MIMO), the source UT 102 and relay UT 106 can transmit independent streams if separated by substantially one half of signal wavelength or more. Likewise, for multi-antenna reception (*e.g.*, SIMO or MIMO), the source UT 102 and relay UT 106 can receive and process independent signals when separated by substantially one half signal wavelength. Where the destination node 104 comprises multiple antennas, system 100 can implement a MIMO arrangement for forward link data (*e.g.*, transmitted to the UT 102) and for reverse link data (*e.g.*, transmitted to the destination).

Alternatively, or In addition to the foregoing, increased processing power can be provided to destination node 104 or UT 102. In one example, aspects disclosed herein can be implemented without additional infrastructure (*e.g.*, fixed relay stations), enabling MIMO-type communication with little or no additional cost. Since UT relays can be organize (*e.g.*, implemented from suitable UTs within range of source UT 102), communication can fit a transient population of a particular environment. For instance, a shopping area can exhibit powerful MIMO communication when crowded, and a less powerful communication when nearly empty. It can be difficult to efficiently deploy fixed hardwire infrastructure to obtain this flexibility, whereas by employing P-P UT communication, this benefit is natural, with minimal cost.

To facilitate relay of information (*e.g.*, forwarding a signal from source UT 102), relay UT 106 can be configured to transmit as well as receive uplink and downlink data. Different frameworks can be employed to achieve this configuration. In a frequency division duplex (FDD) framework, relay UT 106 can transmit uplink and downlink frequencies. In a time division duplex (TDD) framework, relay UT 106 can utilize multiplexing. Where multiple UTs (102, 106) are configured to transmit as well as receive uplink and downlink data, the UTs (102, 106) can act as relays for each other.

In some aspects of the subject disclosure, P-P communication between UTs (102, 106) can employ security, error-correction, or the like for such communication. For instance, encryption can be employed to protect data transmitted between the UTs (102, 106). According to some aspects, the encryption can comprise data secured with a private key, known only to a UT (102, 106) transmitting the data. A public key can be employed by a receiving UT (102, 106) to decode the data. The receiving UT (102, 106) can therefore verify an identity of the transmitting UT as well as verify that the transmitted data is not tampered with, upon proper decoding with the public key. In other aspects, the encryption can comprise a private key known only to a destination node (104), or communicated non-cooperatively prior to commencement of a cooperative communication session. In such aspects, data relayed by the relay UT 106 is in encrypted form, and decrypted by the destination node (104).

According to still other aspects, P-P relay communication can implement fairness principles to encourage sharing wireless resources. Thus, for instance, a protocol can be employed that limits relay communication based on reciprocity, or other fairness principles. Additionally, users can be provided wireless service credits based on an amount of relay communication facilitated by their UT. Accordingly, devices can be limited from excessively utilizing relay resources without suitable reciprocation of such resources. Additionally, users can be motivated to enable sharing on a device.

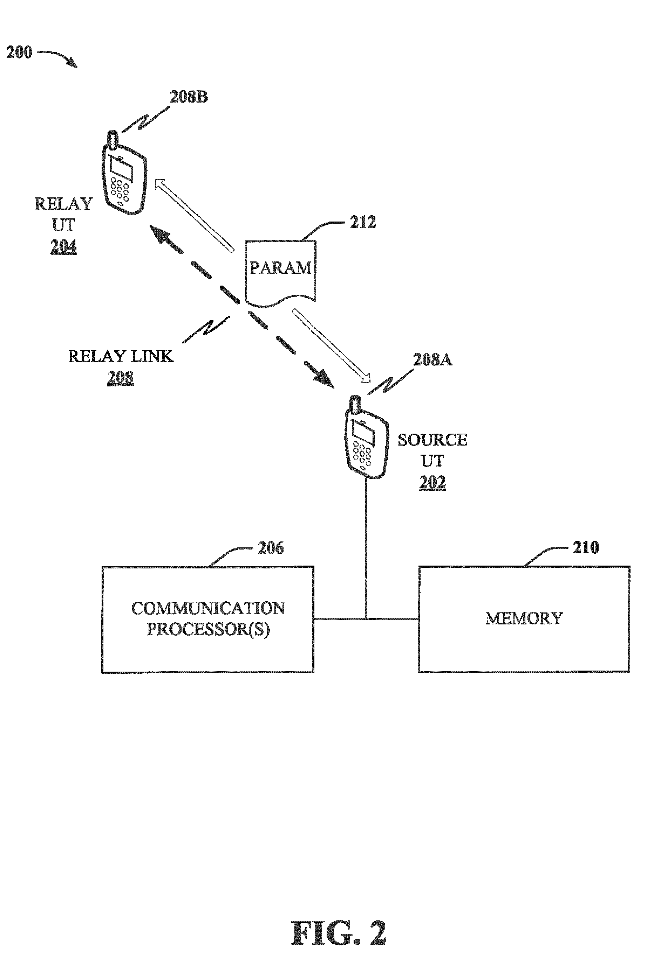

Fig. 2 illustrates a block diagram of an example system 200 providing P-P communication that facilitates multi-antenna communication for UTs. System 200 includes a set af UTs 202, 204 configured to exchange data in P-P communication. Accordingly, the UTs 202, 204 can transmit and receive on uplink and downlink channels. Additionally, the UTs 204, 206 can utilize a timing sequence transmitted by a timing beacon (not depicted) that facilitates P-P communication. Such a timing beacon can be a fixed transmitter that transmits the timing sequence on a wireless channel that the UTs 202, 204 are configured to recognize. Alternatively, the timing beacon can comprise a mobile transmitter sending such a signal. In some aspects, the timing beacon can be transmitted by one of the UTs 202, 204 to facilitate the P-P communication.

In addition to the above, the UTs 202, 204 of system 200 can comprise a source UT 202 and a relay UT 204. The source UT 202 can comprise one or more communication processors 206 for executing instructions stored in memory 210 pertinent to multi-antenna wireless communication (*e.g.,* MISO, SIMO, MIMO). Such instructions can comprise forming a wireless communication channel (*e.g.,* P-P channel) with the relay UT 204. Additionally, the instructions can comprise establishing a relay link 208 over the wireless channel based on a relay parameter 212. The relay parameter 212 and relay link 208 can facilitate transmitting independent signals, or processing independent received signals, for the multi-antenna communication, as described herein.

According to particular aspects of the subject disclosure, the relay parameter 212 can comprise an index that distinguishes an antenna 208A of the source UT 202 from an antenna 208B of the relay UT 204. In some aspects of the subject disclosure, the relay parameter 212 can comprise a set of distinct indices that distinguish individual relay antennas 208B of a set of such relay antennas, as well as individual source antennas 208A of a set of such source antennas for the multi-antenna communication. As an example, if the relay UT 204 and source UT 202 each comprise a pair of transmit-receive antennas, the relay parameter can establish distinct indices for each of the relay antennas 208B or for each of the source antennas 208A, or both.

Utilizing the relay parameter 212, relay UT 204 can generate a wireless stream, or signal, transmitted by the relay antenna 208B (or, *e.g.,* a set of wireless streams transmitted by individual antennas of a set of relay antennas 208B). Likewise, the source UT 202 can employ source indexing associated with the relay parameter 212 to generate an additional stream(s) transmitted by the source antenna(s) 208A. As described at Fig. 1, *supra*, if the source and relay antennas 208A, 208B are separated by a distance of substantially one half of a signal wavelength of the respective streams, the streams are independent and can be utilized to achieve MIMO-type throughput gains. In addition to the foregoing, the relay antenna(s) 208B can employ the relay parameter 212 to receive a stream or signal sent by a remote transmitter (not depicted, but see **Fig. 1***, supra*, at 104), and the source antenna(s) 208A can additionally employ such parameter 212 to receive a like stream or signal (which can, *e.g.,* be the same transmission, or independent transmissions sent by an array of remote transmitters). A signal received by the relay UT 204 can be forwarded to the source UT 202 for processing consistent with multi-antenna reception. Where such antennas 208A, 208B are of sufficient distance, the processing can yield throughput gains consistent with MISO or MIMO communication.

It should be appreciated that the indexing provided by relay parameter 212 facilitates the transmission/reception utilized in the multi-antenna communication. For instance, relay UT 204 can employ index-specific instructions for generating signal timing, signal frequency, signal filtering, signal compression, or the like, of a relay stream. Particularly, the instructions for generating the relay stream at the relay UT 204 can be identified from an index provided for the relay antenna 208B. Furthermore, source UT 202 can employ a corresponding set of instructions identified by a source antenna index to generate a source stream. The combination of the relay stream and the source stream, each generated in accordance with respective relay and source instructions, yield a multi-antenna transmission. Likewise, index-specific instructions can identify respective sets of relay and source processing instructions for processing or relaying received wireless signals to yield multi-antenna reception. Accordingly, due to the relay parameter 212 indexing and index-specific instructions, respective P-P UTs 202, 204 can engage in distributed multi-antenna communication, avoiding a need for centralized processing to generate independent streams or implement independent processing.

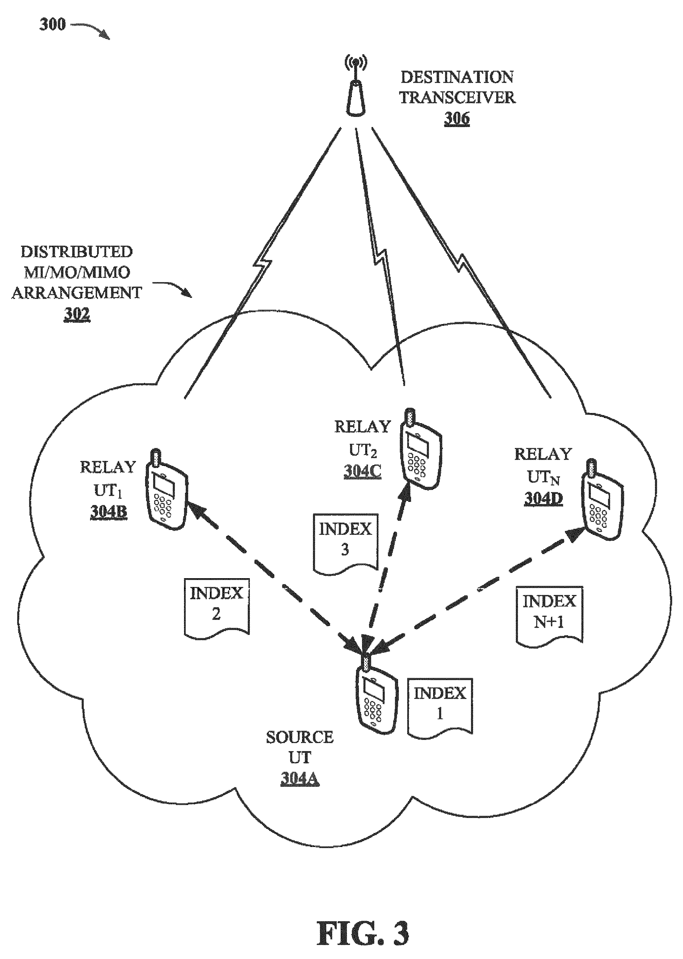

Fig. 3 illustrates a block diagram of an example system 300 that provides an array of P-P UTs for multi-antenna communication according to aspects of the subject disclosure. System 300 includes a distributed multi-antenna (*e.g*., multiple input [MI], multiple output [MO], MIMO) arrangement comprising a set of UTs 304A, 304B, 304C, 304D (304A-304D). Although the arrangement of Fig. 3 depicts UTs engaged in distributed multi-antenna communication, it should be appreciated that one or more of the depicted UTs (304A-304D) can be replaced with a fixed relay station, a base station, or other suitable wireless transceiver without departing from the scope of the subject disclosure or appended claims. Thus, in at least one aspect of the subject disclosure, one or more of UTs 304A-304D can couple with a fixed transceiver (*e.g.*, destination transceiver 306) to provide multi-antenna communication for the fixed transceiver.

The arrangement of UTs 304A-304D comprises a source UT 304A having a P-P link with each of a set of relay UTs 304B, 304C, 304D. In at least one alternative aspect, one or more P-P links between the source UT 304A and one or more relay UTs 304B, 304C, 304D can be an indirect link (not depicted), routed through another relay UT (304B, 304C, 304D), a fixed relay (*e.g*., destination transceiver 306) or a base station (not depicted), or the like. In some aspects, the respective UTs 304A-304D can be configured for P-P communication, as well as for network communication *(e.g.,* with a destination transceiver 306). Accordingly, the UTs 304A-304D can exchange data wirelessly with the destination transceiver, as indicated by the wireless links (which optionally includes a wireless link between the destination 306 and source UT 304A, although not depicted), and with at least the source UT 304A. as depicted by the dashed lines. In some aspects, the relay UTs 304B, 304C, 304D can further exchange data wirelessly among the respective relay UTs 304B, 304C, 304D.

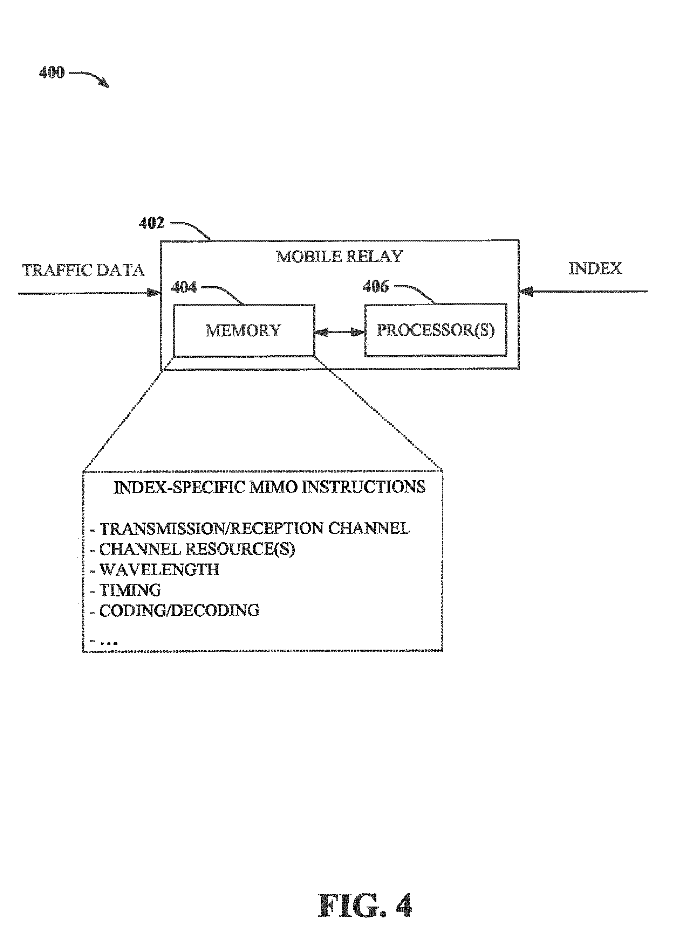

The source UT 304A can generate a set of indexing parameters distinguishing an antenna of each UT 304A-304D in the arrangement 302. Specifically, a first index is associated with the source UT 304A, a second index associated with relay UT₁ 304B, a third index associated with relay UT₂ 304C and an N+1 index associated with relay UT_{N} 304D, where N is an integer greater than 2. The respective indices are utilized by associated UTs 304A-304D to identify respective sets of multi-antenna communication instructions (*e.g.*, see **Fig. 4****,** *infra*) for multi-antenna transmission or reception particular to respective nodes (304A-304D) of the distributed arrangement 302. Thus, as described herein, the respective UTs 304A-304D can transmit respective versions of a source signal initiated by source UT 304A, or receive or process respective versions of a destination signal initiated by destination transceiver 306.

According to some aspects of the subject disclosure, the UTs 304A-304B can store a superset of index-specific multi-antenna communication instructions in memory (e.g., comprising all sets pertinent to the multi-antenna communication, where individual sets are identified by index). Upon receiving an index from the source UT 304A, the relay UTs 304B, 304C, 304D can select an appropriate set identified by the received index. In other aspects, the superset of instructions can be distributed by the source UT 304A to respective relay UTs 304B, 304C, 304D after a P-P link is established there with, to facilitate the multi-antenna communication.

**Fig. 4** illustrates a block diagram of an example system 400 for implementing distributed multi-antenna transmission or reception according to aspects of the subject disclosure. System 400 comprises a mobile relay 402 operable for wireless communication with other wireless nodes (not depicted). Such other wireless nodes can comprise fixed nodes, such as wireless network access points, and mobile nodes, such as a UT.

Mobile relay 402 can comprise memory for storing instructions for multi-antenna communications. The instructions can comprise processor steps that, when executed, facilitate multi-antenna transmission or reception. Additionally, the instructions can comprise subsets of instructions for implementing the transmission or reception at a particular node in a wireless relay arrangement (*e.g.,* see **Fig. 3****,** *supra*)*.* Furthermore, the subsets of instructions can be associated with respective antenna indices, enabling a particular subset to be selected based on receipt or assignment of such an index to the mobile relay 402. Specifically, subsets of instructions can specify a particular wireless channel for transmission or reception of wireless signals at particular nodes. Further, the subsets of instructions can comprise a set of channel resources to be employed for the transmission or reception at particular nodes. For instance, such instructions can comprise a frequency or wavelength to be employed for the transmission or reception, a time-slot, set of symbols (*e.g*., OFDM symbols), transmit power, *etc.* In some aspects, the subsets of instructions can comprise coding or decoding instructions, signal filtering instructions (*e.g.,* for noise reduction), data compression instructions, secure communication instructions (*e.g*., for establishing a secure link, for encrypting/decrypting data), data verification instructions (*e.g*., for employing error-correction, error-detection, feedback for data confirmation, *etc.*)*,* or the like, or a combination thereof, for particular nodes.

Accordingly, mobile relay 402 can obtain an index parameter for identifying a subset(s) of the instructions to be utilized by mobile relay 402 in multi-antenna transmission or reception. In some aspects, the index parameter is provided by a source node (not depicted) sharing a P-P link with the mobile relay 402. In other aspects, the index parameter can be generated by the mobile relay 402 based on another subset of the instructions configured for generating or distributing node index parameters. Upon obtaining the index parameter, an index-specific subset(s) of instructions can then be identified and executed by one or more processors 406 to implement the transmission or reception. Furthermore, the mobile relay 402 can obtain traffic data on which the identified subset(s) of the instructions are executed. The traffic data can comprise transmission data provided by a source node (not depicted), or a received signal to be processed or forwarded to the source node, as described herein.

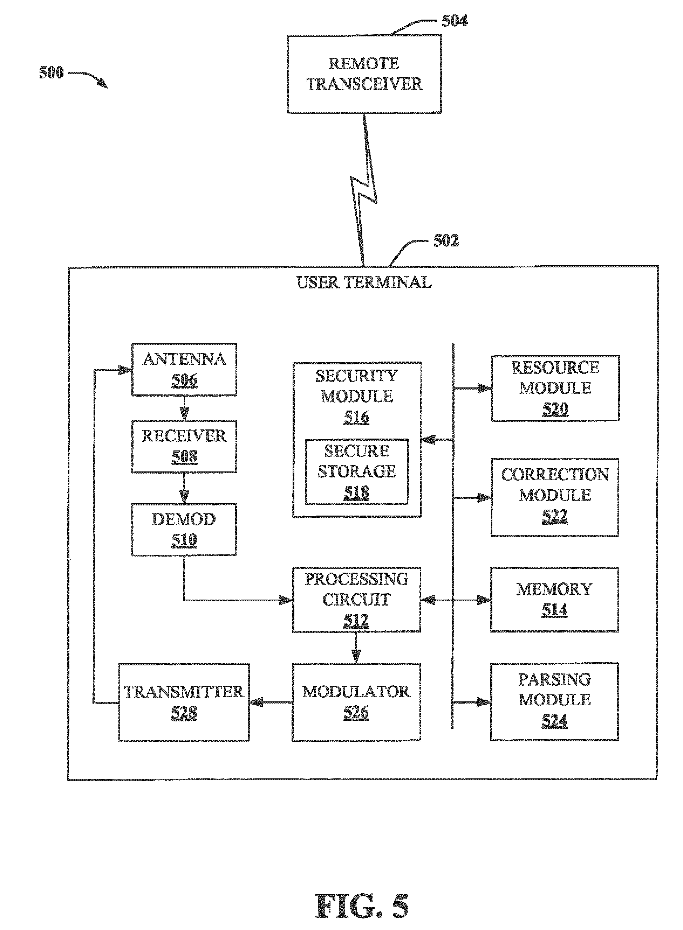

**Fig. 5** illustrates a block diagram of a sample system 500 comprising a UT 502 operable to implement aspects of the subject disclosure. UT 502 can be configured to wirelessly couple with one or more remote transceivers 504 (*e*.*g*., access point, P-P partner) of a fixed or *ad-hoc* wireless network. For fixed network communication, UT 502 can receive wireless signals from a base station (504) on a forward link channel and respond with wireless signals on a reverse link channel. In addition, for P-P communication, UT 502 can receive wireless signals from a remote P-P partner (504) on the forward link channel or reverse link channel, and responds with wireless signals on the reverse link channel or forward link channel, respectively. In addition, UT 502 can comprise instructions stored in memory 514 for implementing multi-antenna communication in conjunction with one or more other remote transceivers 504, as described herein.

UT 502 includes at least one antenna 506 *(e.g.,* a wireless transmission/reception interface or group of such interfaces comprising an input/output interface) that receives a signal and receiver(s) 508, which performs typical actions (*e.g.*, filters, amplifies, down-converts, *etc.)* on the received signal. In general, antenna 506 and transmitter 528 (collectively referred to as a transceiver) can be configured to facilitate wireless data exchange with remote transceiver(s) 504. According to at least some aspects, the antenna(s) 506 can be assigned one or more distinct indexing parameters to distinguish the antenna(s) 506 from an antenna at least from an antenna of the remote transceiver 504.

Antenna 506 and receiver(s) 508 can also be coupled with a demodulator 510 that can demodulate received symbols and provide such signals to a processing circuit(s) 512 for evaluation. It should be appreciated that processing circuit(s) 512 can control and/or reference one or more components (506, 508, 510. 514, 516, 518, 520, 522, 524, 526, 528) of the UT 502. Further, processing circuit(s) 512 can execute one or more modules, applications, engines, or the like (520, 522, 524) that comprise information or controls pertinent to executing functions of the UT 502. For instance, such functions can include obtaining an index for antenna(s) 506 and selecting a set of multi-antenna communication instructions associated with the index. In addition, functions can include implementing secure communication with the remote transceiver 504, selecting appropriate channel resources for multi-antenna communication, providing error correction or detection for exchange of the index, parsing one or more sets of instructions for respective antennas (506, 504) of a P-P communication configuration, or like operations, as described herein.

Additionally, the memory 514 of UT 502 is operatively coupled to processing circuit(s) 512. Memory 514 can store data to be transmitted, received, and the like, and instructions suitable to conduct wireless communication with a remote device (504). Specifically, the instructions can be utilized to implement distributed multi-antenna communication, as described herein. Further, memory 514 can store the modules, applications, engines, *etc.* (520, 522, 524) executed by processing circuit(s) 512, above.

Further to the above, UT 502 can comprise a security module 516 for implementing secure communication with the remote transceiver 504. In some aspects, the security module 516 can comprise secure storage 518 for maintaining a private key associated with a digital certificate. The private key can be utilized to digitally sign data stored in memory 514 or transmitted by UT 502, to verify authenticity and integrity of the data. In other aspects, secure storage 518 can maintain secret data, unique or substantially unique (*e.g.,* unique among a set of UTs, wireless terminals, or the like) to UT 502, that can be utilized to encrypt data. The secret data can further be provided to the remote transceiver 504 *via* secure communication for decrypting the encrypted data. Thus, for instance, traffic data or indexing parameters exchanged between UT 502 and remote transceiver 504 can be secured from tampering, spoofing, *etc.,* by security module 516.

According to other aspects of the subject disclosure, UT 502 can comprise a resource module 520 for selecting a set of wireless channel resources for implementing multi-antenna communication as described herein. In some aspects, the selection can be according to an index parameter assigned to the UT 502 or one or more antennas 506 of the UT 502. Furthermore, UT 502 can comprise an error correction module 522 that provides reliability in exchanging data with the remote transceiver 504. For instance, the error correction module 522 can employ forward-error correction, error detection or feedback to reliably transmit or receive a relay parameter (*e.g.,* an index) to/from the remote transceiver 504. Additionally, UT 502 can comprise a parsing module 524 that establishes respective roles for respective antennas of the UT 502 and the remote transceiver 504 in implementing multiple-antenna transmission or reception. For instance, the respective roles can be characterized by respective subsets of multi-antenna communication instructions, associated with distinct antenna indices, as described herein.

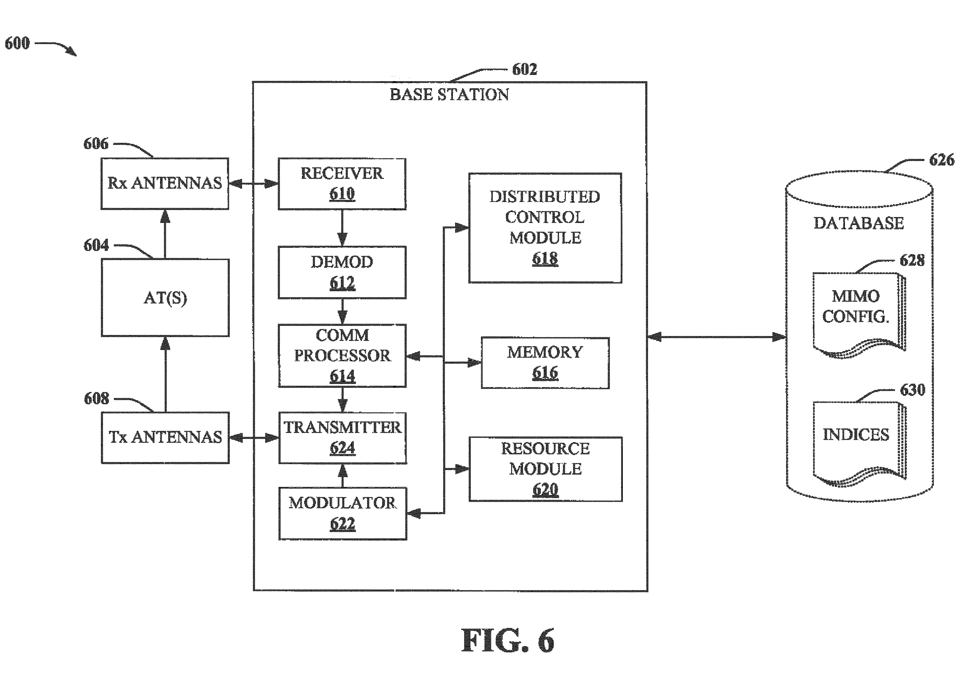

**Fig. 6** illustrates a block diagram of an example wireless communication system 600 according to aspects of the subject disclosure. Specifically, system 600 can comprise a base station configured to facilitate multi-antenna transmission for a set of UTs 604 configured for P-P communication. For instance, base station 602 can be configured to generate sets of multi-antenna communication instructions to be implementing by respective UTs 604 or antennas of such UTs 604. Additionally, the sets of instructions can be associated with distinct indices. Furthermore, respective indices can be transmitted to respective UTs 604 (or, *e.g.,* to a relay UT 604 for distribution to other such UTs 604) for identifying respective sets of instructions to implement the multi-antenna communication as described herein.

Base station 602 (*e.g.,* access point, ...) can comprise a receiver 610 that obtains wireless signals from one or more of the UTs 604 through one or more receive antennas 606, and a transmitter 624 that sends coded/modulated wireless signals provided by modulator 622 to the one or more UTs 604 through a transmit antenna(s) 608. Receiver 610 can obtain information from receive antennas 606 and can further comprise a signal recipient (not shown) that receives uplink data transmitted by UT(s) 604. Additionally, receiver 610 is operatively associated with a demodulator 612 that demodulates received information. Demodulated symbols are analyzed by a communication processor 614. Communication processor 614 is coupled to a memory 616 that stores information related to functions provided or implemented by base station 602. In one instance, stored information can comprise protocols for parsing wireless signals and scheduling forward link transmission of base station 602 and reverse link transmissions of the UT(s) 604.

In at least one aspect, base station 602 can obtain data identifying a UT (604) and at least one P-P partner (604) of the UT (604). The base station 602 can employ a distributed control module 618 to generate indexing parameters facilitating distributed processing for multiple-antenna communication for the UT and P-P partner. For instance, the indexing parameters can distinguish the UT (604) and P-P partner (604) or respective antennas thereof. Additionally, the indexing parameters can be associated with subsets of MIMO configuration instructions 628 designed for implementing the multiple-antenna communication by the UT (604) and P-P partner (604). Base station 602 can store the instructions (*e.g.*, including MIMO configuration instructions 628 and antenna indices 630) in memory 616 or in an external database 626 coupled with the base station 602 by a secure link. Base station 602 can access the instructions 628 and indices 630 as required by the UTs (604), to provide such information (628, 630). Accordingly, base station 602 can implement network-assisted MIMO communication for P-P UTs 604, where at least one such UT 604 is wirelessly coupled with base station 602.

The aforementioned systems have been described with respect to interaction between several components, modules and/or communication interfaces. It should be appreciated that such systems and components/modules/interfaces can include those components or sub-components specified therein, some of the specified components or sub-components, and/or additional components. For example, a system could include source UT 202, relay UT 204, base station 602 and database 626, or a different combination of these or other components. Sub-components could also be implemented as components communicatively coupled to other components rather than included within parent components. Additionally, it should be noted that one or more components could be combined into a single component providing aggregate functionality. For instance, security module 516 can include error correction module 522, or *vice* versa, to facilitate secure communication and error correction by way of a single component. The components can also interact with one or more other components not specifically described herein but known by those of skill in the art.

Furthermore, as will be appreciated, various portions of the disclosed systems above and methods below may include or consist of artificial intelligence or knowledge or rule based components, sub-components, processes, means, methodologies, or mechanisms (*e.g.,* support vector machines, neural networks, expert systems, Bayesian belief networks, fuzzy logic, data fusion engines, classifiers...). Such components, *inter alia,* and in addition to that already described herein, can automate certain mechanisms or processes performed thereby to make portions of the systems and methods more adaptive as well as efficient and intelligent.

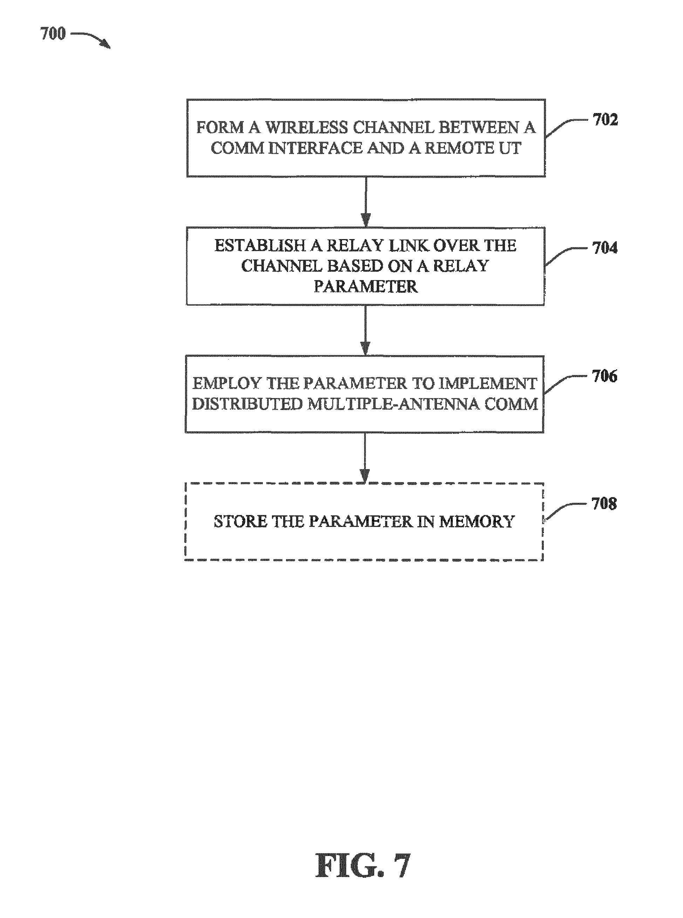

In view of the exemplary systems described *supra,* methodologies that may be implemented in accordance with the disclosed subject matter will be better appreciated with reference to the flow charts of FIGs. 7-9. While for purposes of simplicity of explanation, the methodologies are shown and described as a series of blocks, it is to be understood and appreciated that the claimed subject matter is not limited by the order of the blocks, as some blocks may occur in different orders and/or concurrently with other blocks from what is depicted and described herein. Moreover, not all illustrated blocks may be required to implement the methodologies described hereinafter. Additionally, it should be further appreciated that the methodologies disclosed hereinafter and throughout this specification are capable of being stored on an article of manufacture to facilitate transporting and transferring such methodologies to computers. The term article of manufacture, as used, is intended to encompass a computer program accessible from any computer-readable device, device in conjunction with a carrier, or storage medium.

**Fig. 7** depicts a flowchart of an example methodology 700 for providing distributed processing for multi-antenna communication in a P-P wireless environment. At 702, method 700 can employ at least one communication processor to form a wireless channel between a communication interface of a UT and a remote UT. At 704, method 700 can establish a relay link over the wireless channel based on a relay parameter. Specifically, the relay parameter can index an antenna of the UT or of the remote UT. Such indexing can facilitate distributed multi-antenna transmission or reception by identifying respective sets of instructions for transmitting or receiving signals in a MISO, SIMO, or MIMO configuration, as described herein.

At 706, method 700 can employ the relay parameter to implement distributed multi-antenna communication at the UT. For instance, an index assigned to an antenna of the UT by the relay parameter can be utilized to select a set of communication instructions for the antenna. By implementing the selected set of instructions, the UT can generate one of multiple SIMO or MIMO transmissions independent of the remote UT, or receive or process one of multiple MISO or MIMO received signals independent from the remote UT. At 708, method 700 can optionally store the relay parameter in memory to facilitate the multi-antenna communication, or to facilitate subsequent such communications between the UT and remote UT.

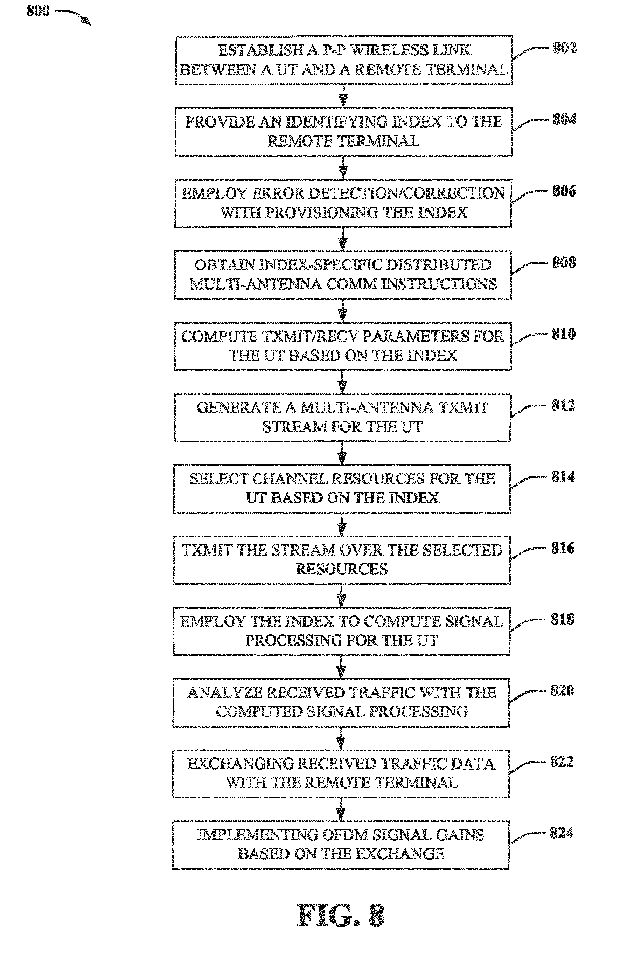

**Fig. 8** depicts a flowchart of an example methodology 800 for providing distributed multi-antenna communication according to additional aspects of the subject disclosure. At 802, method 800 can establish a P-P wireless link between a UT and a remote terminal. At 804, method 800 can provide an identifying index to the remote terminal, distinguishing the terminal or an antenna(s) thereof from the UT, or an antenna(s) of the UT. In some aspects, at 806, method 800 can employ error detection, error correction or feedback in provisioning the identifying index to the remote terminal. Such provisioning can facilitate accurate exchange of the index, or help to detect errors in such provisioning to re-send the index, for instance.

At 808, method 800 can obtain index-specific distributed multi-antenna communication instructions. The index-specific instructions can be based on the identifying index provided to the remote terminal (*e.g.,* a set of instructions not correlated to the identifying index), or based on a distinct index assigned to the UT. At 810, method 800 can compute transmit or receive parameters for the UT based on the index and index-specific instructions. At 812, method 800 can generate a multi-antenna transmit stream for the UT. At 814, method 800 can select channel resources for the UT based on the index. Such channel resources can be complementary to resources assigned for the UT based on the identifying index, for instance to avoid interference between signals transmitted by the UT and remote UT. At 816, method 800 can transmit the computed stream over the selected resources.

At 818, method 800 can employ the index, or a related index assigned to the UT, to compute signal processing for the UT. At 820, method 800 can analyze received traffic with the computed signal processing. Such analysis can comprise forwarding the signal, decoding the signal and encoding data extracted from the signal for transmission, filtering the signal, compressing the signal, amplifying the signal, encrypting or decrypting the signal, or the like, or a combination thereof. At 822, method 800 can obtain a corresponding receive signal traffic data from the remote terminal. At 824, method 800 can implement OFDM signal gains based on the exchange, for instance by appropriately processing the analyzed received traffic and the corresponding receive signal traffic obtained from the remote terminal.

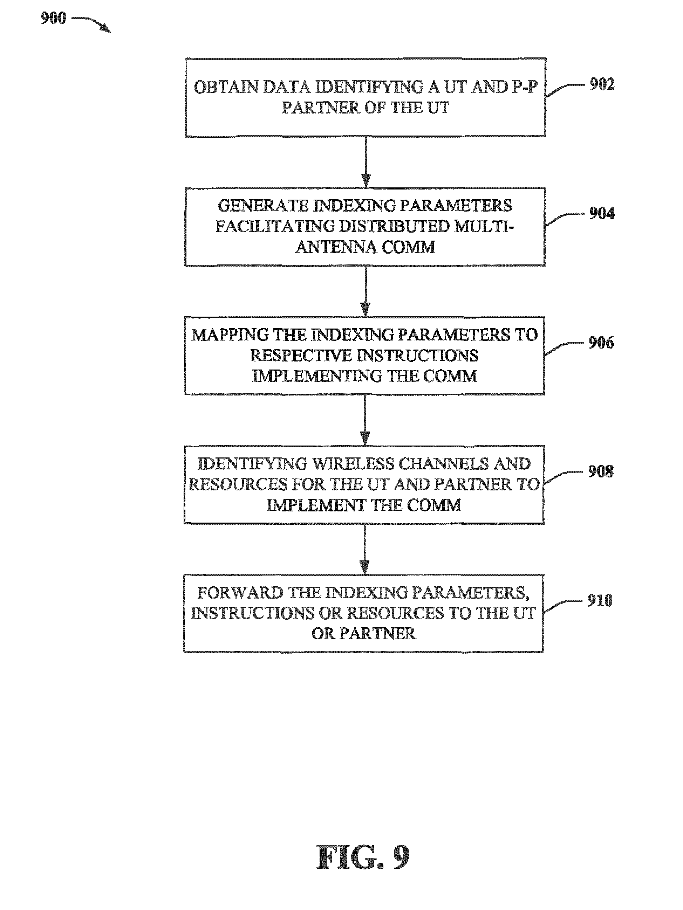

**Fig. 9** illustrates a flowchart of a sample methodology 900 for facilitating distributed processing for multi-antenna wireless communication for P-P UTs according to further aspects of the subject disclosure. At 902, method 900 can obtain data identifying a UT and a P-P partner of the UT. At 904, method 900 can generate indexing parameters facilitating distributed multi-antenna communication for the UT and P-P partner. At 906, method 900 can map the respective indexing parameters to respective instructions for independent implementation of the communication at the UT and P-P partner. At 908, method 900 can identify respective wireless channels and resources for the UT and P-P partner to be employed in implementing the communication. At 910, method 900 can forward the indexing parameters, instructions or identified channels and resources to the UT or P-P partner. Based on such parameters, instructions and channels/resources, the UT and P-P partner can independently process and transmit outbound signals, or independently receive, process or exchange inbound wireless signals to implement the multi-antenna communication in a distributed processing arrangement.

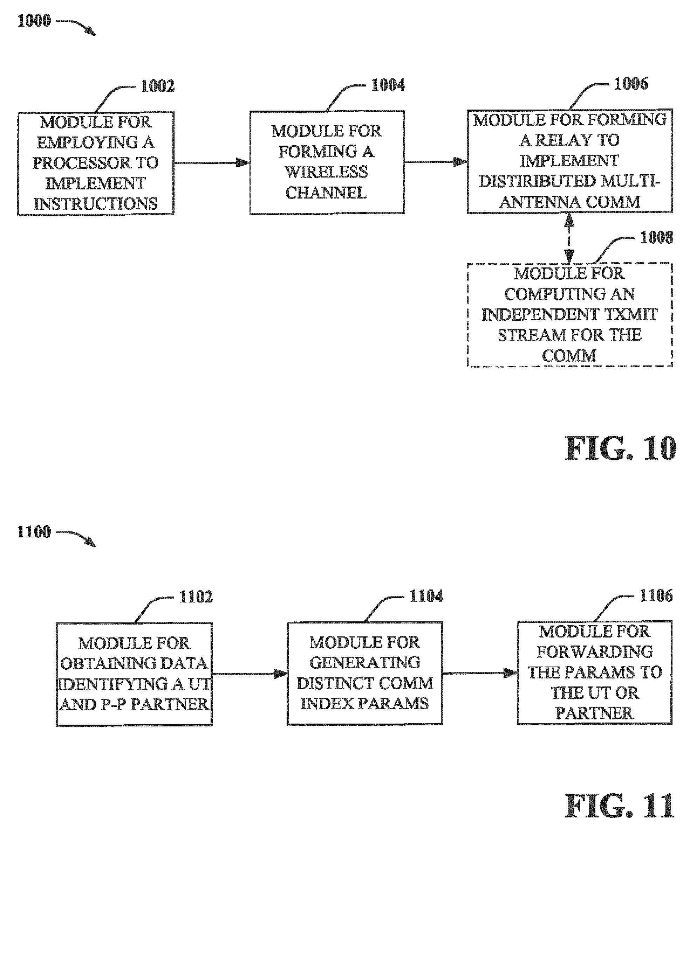

**Figs. 10** and **11** depict block diagrams of example systems 1000, 1100 for employing and facilitating, respectively, distributed processing to implement MIMO, SIMO or MISO communication for a set of P-P mobile terminals according to aspects of the subject disclosure. For example, systems 1000 and 1100 can reside at least partially within a wireless communication network and/or within a transmitter such as a node, base station, access point, user terminal, personal computer coupled with a mobile interface card, or the like. It is to be appreciated that systems 1000 and 1100 are represented as including functional blocks, which can be functional blocks that represent functions implemented by a processor, software, or combination thereof (*e.g.*, firmware).

System 1000 can comprise a module 1002 for employing a processor to implement multi-antenna wireless communication instructions configured for a particular node of a set of such nodes. For instance, the node can be a UT wirelessly coupled with other nodes of the set. Additionally, system 1000 can comprise a module 1004 for employing the processor in forming a wireless channel between the node and one or more other such nodes of the set to form an *ad-hoc* network of such nodes. Furthermore, system 1000 can comprise a module 1006 for forming a relay over the wireless channel to enable distributed processing for a multiple-antenna wireless communication. For instance, the wireless channel can enable the nodes to share traffic data. As a result, a further module 1008 can independently compute a transmission of the traffic data to implement the distributed processing. Where additional nodes also independently compute transmissions for the traffic data, the *ad-hoc* network can generate a SIMO or MIMO transmission. Additionally, the sharing of traffic data can facilitate independent reception, processing or forwarding of received transmissions, resulting in MISO or MIMO reception for the *ad-hoc* network.

System 1100 can comprise a module 1102 for obtaining data identifying a UT and a P-P partner of the UT. Additionally, system 1100 can comprise a module 1104 for generating distinct communication index parameters for the UT and P-P partner. The index parameters can be employed to distinguish an antenna of the UT from a corresponding antenna of the P-P partner. Additionally, the index parameters can be associated with respective sets of instructions for generating wireless transmissions, or receiving and processing wireless transmissions, at the UT and P-P partner, respectively. By employing respective index parameters, the UT and P-P partner can identify the respective sets of instructions, and independently process those instructions to implement SIMO, MISO or MIMO communication. To convey the parameters, system 1100 can comprise a module 1106 for forwarding the parameters, and optionally the instructions, to the UT or P-P partner.

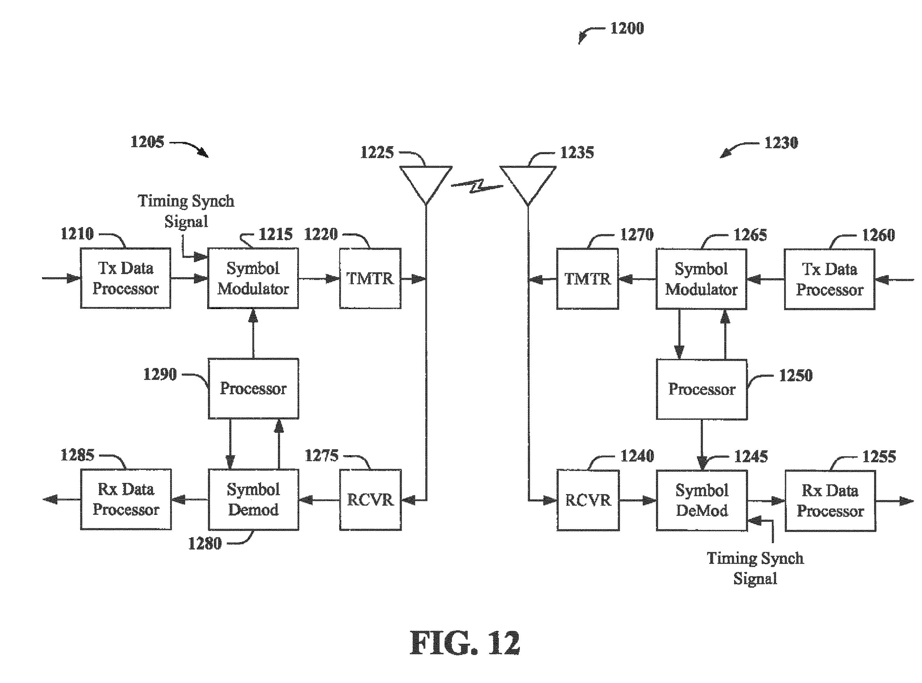

**Fig. 12** depicts a block diagram of an example system 1200 that can facilitate *ad-hoc* wireless communication according to some aspects disclosed herein. Based on timing sequence of a synchronization timing signal (*e.g.*, transmitted by a timing beacon - not depicted) obtained at a wireless terminal 1205, a transmit (TX) data processor 1210 receives, formats, codes, interleaves, and modulates (or symbol maps) traffic data and provides modulation symbols ("data symbols"). A symbol modulator 1215 receives and processes the data symbols and pilot symbols and provides a stream of symbols. A symbol modulator 1220 multiplexes data and pilot symbols and provides them to a transmitter unit (TMTR) 1220. Each transmit symbol can be a data symbol, a pilot symbol, or a signal value of zero.

TMTR 1220 receives and converts the stream of symbols into one or more analog signals and further conditions (e.g., amplifies, filters, and frequency upconverts) the analog signals to generate a transmit signal suitable for transmission over a wireless channel. The transmit signal is then transmitted through an antenna 1225 to a remote terminal(s) (1430) or other peer-to-peer partner. At wireless terminal 1230, also based on the timing sequence of the synchronization signal, an antenna 1235 receives the transmit signal sent by TMTR 1220 and provides a received signal to a receiver unit (RCVR) 1240. Receiver unit 1240 conditions (*e.g.*, filters, amplifies, and frequency downconverts) the received signal and digitizes the conditioned signal to obtain samples. A symbol demodulator 1245 demodulates and provides received pilot symbols to a processor 1250 for channel estimation. Symbol demodulator 1245 further receives a frequency response estimate for the downlink from processor 1250, performs data demodulation on the received data symbols to obtain data symbol estimates (which are estimates of the transmitted data symbols), and provides the data symbol estimates to an RX data processor 1255, which demodulates (*e.g.*, symbol demaps), deinterleaves, and decodes the data symbol estimates to recover the transmitted traffic data. The processing by symbol demodulator 1245 and RX data processor 1255 is complementary to the processing by symbol modulator 1215 and TX data processor 1210, respectively, at wireless terminal 1205.

On the wireless terminal 1230, a TX data processor 1260 processes traffic data and provides data symbols. A symbol modulator 1265 receives and multiplexes the data symbols with pilot symbols, performs modulation, and provides a stream of symbols. A transmitter unit 1270 then receives and processes the stream of symbols to generate a signal, which is transmitted by the antenna 1235 to the wireless terminal 1205.

At wireless terminal 1205, the signal from terminal 1230 is received by the antenna 1225 and processed by a receiver unit 1275 to obtain samples. A symbol demodulator 1280 then processes the samples and provides received pilot symbols and data symbol estimates for the communication channel. An RX data processor 1285 processes the data symbol estimates to recover the traffic data transmitted by terminal 1230. A processor 1290 performs channel estimation for each active peer-to-peer partner transmitting on the communication channel. Multiple terminals can transmit pilots concurrently on peer-to-peer channels, or on their respective sets of peer-to-peer channel subbands, where peer-to-peer channel subband sets can be interlaced.

Processors 1290 and 1250 direct (*e.g.,* control, coordinate, manage, *etc.)* operation at terminal 1205 and terminal 1230, respectively. Respective processors 1290 and 1250 can be associated with memory units (not shown) that store program codes and data. Processors 1290 and 1250 can also perform computations to derive frequency and impulse response estimates for the communication channel, respectively.

The techniques described for system 1200 can be implemented by various means. For example, these techniques can be implemented in hardware, software, or a combination thereof. For a hardware implementation, which can be digital, analog, or both digital and analog, the processing units used for channel estimation can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. With software, implementation can be through modules (*e.g.*, procedures, functions, and so on) that perform the functions described herein. The software codes can be stored in memory unit and executed by the processors 1290 and 1250.

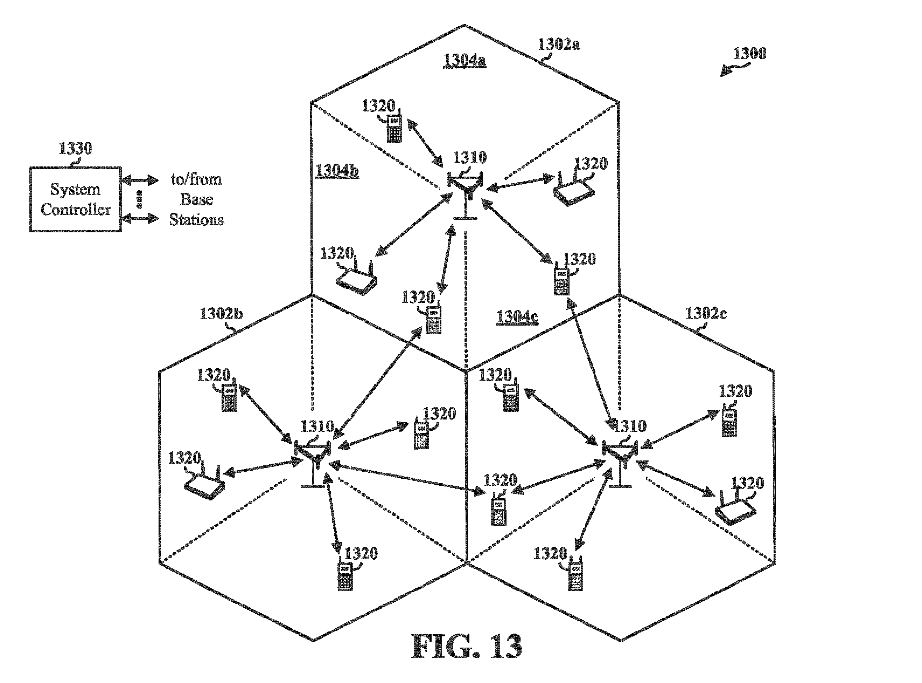

**Fig. 13** illustrates a wireless communication system 1300 with multiple base stations (BSs) 1310 (*e.g.*, wireless access points) and multiple terminals 1320 (*e.g*., UTs), such as can be utilized in conjunction with one or more aspects. A BS (1210) is generally a fixed station that communicates with the terminals and can also be called an access point, a Node B, or some other terminology. Each BS 1310 provides communication coverage for a particular geographic area or coverage area, illustrated as three geographic areas in **Fig. 13****,** labeled 1302a, 1302b, and 1302c. The term "cell" can refer to a BS or its coverage area depending on the context in which the term is used. To improve system capacity, a BS geographic area/coverage area can be partitioned into multiple smaller areas (*e.g*., three smaller areas, according to cell 1302a in Fig. 13), 1304a, 1304b, and 1304c. Each smaller area (104a, 1304b, 1304c) can be served by a respective base transceiver subsystem (BTS). The term "sector" can refer to a BTS or its coverage area depending on the context in which the term is used. For a sectorized cell, the BTSs for all sectors of that cell are typically co-located within the base station for the cell. The transmission techniques described herein can be used for a system with sectorized cells as well as a system with un-sectorized cells. For simplicity, in the subject description, unless specified otherwise, the term "base station" is used generically for a fixed station that serves a sector as well as a fixed station that serves a cell.

Terminals 1320 are typically dispersed throughout the system, and each terminal 1320 can be fixed or mobile. Terminals 1320 can also be called a mobile station, user equipment, a user device, or some other terminology, as described herein. A terminal 1320 can be a wireless device, a cellular phone, a personal digital assistant (PDA), a wireless modem card, and so on. Each terminal 1320 can communicate with zero, one, or multiple BSs 1310 on the downlink *(e.g.,* FL) and uplink (*e.g.*, RL) at any given moment. The downlink refers to the communication link from the base stations to the terminals, and the uplink refers to the communication link from the terminals to the base stations.

For a centralized architecture, a system controller 1330 couples to base stations 1310 and provides coordination and control for BSs 1310. For a distributed architecture, BSs 1310 can communicate with one another as needed (*e.g.,* by way of a wired or wireless backhaul network communicatively coupling the BSs 1310). Data transmission on the forward link often occurs from one access point to one access terminal at or near the maximum data rate that can be supported by the forward link or the communication system. Additional channels of the forward link (*e.g.,* control channel) can be transmitted from multiple access points to one access terminal. Reverse link data communication can occur from one access terminal to one or more access points.

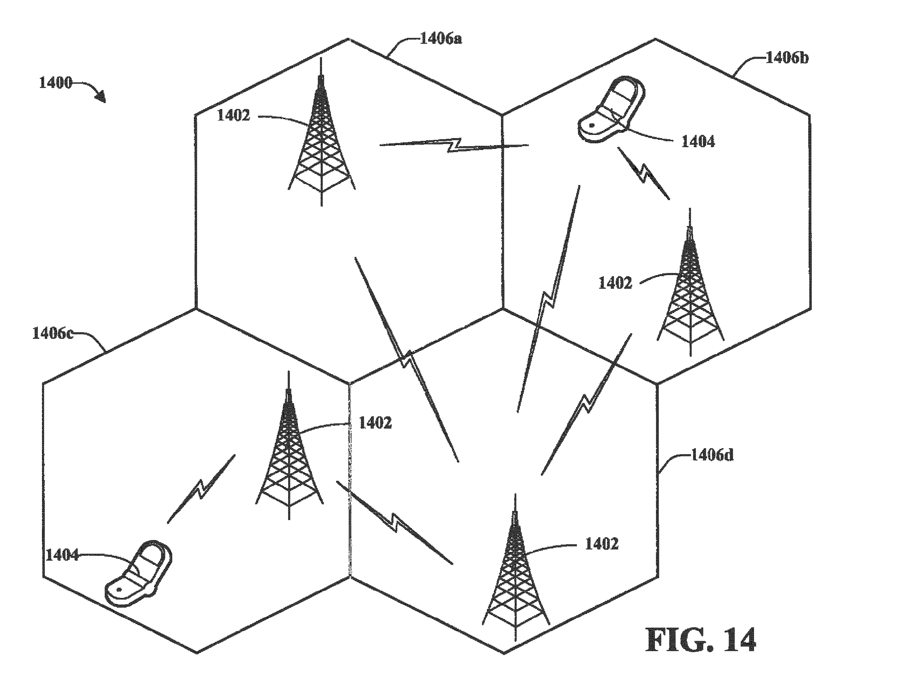

**Fig. 14** is an illustration of a planned or semi-planned wireless communication environment 1400, in accordance with various aspects. System 1400 can comprise one or more BSs 1402 in one or more cells and/or sectors that receive, transmit, repeat, *etc*., wireless communication signals to each other and/or to one or more mobile devices 1404. As illustrated, each BS 1402 can provide communication coverage for a particular geographic area, illustrated as four geographic areas, labeled 1406a, 1406b, 1406c and 1406d. Each BS 1402 can comprise a transmitter chain and a receiver chain, each of which can in turn comprise a plurality of components associated with signal transmission and reception (*e.g.*, processors, modulators, multiplexers, demodulators, demultiplexers, antennas, and so forth, see **Fig. 6****),** as will be appreciated by one skilled in the art. Mobile devices 1404 can be, for example, cellular phones, smart phones, laptops, handheld communication devices, handheld computing devices, satellite radios, global positioning systems, PDAs, and/or any other suitable device for communicating over wireless network 1400. System 1400 can be employed in conjunction with various aspects described herein in order to facilitate providing and/or utilizing synchronized wireless signal transmission in a wireless communication environment (1300), as set forth herein.

As used in the subject disclosure, the terms "component," "system," "module" and the like are intended to refer to a computer-related entity, either hardware, software, software in execution, firmware, middle ware, microcode, and/or any combination thereof. For example, a module can be, but is not limited to being, a process running on a processor, a processor, an object, an executable, a thread of execution, a program, a device, and/or a computer. One or more modules can reside within a process, or thread of execution; and a module can be localized on one electronic device, or distributed between two or more electronic devices. Further, these modules can execute from various computer-readable media having various data structures stored thereon. The modules can communicate by way of local or remote processes such as in accordance with a signal having one or more data packets (*e.g.,* data from one component interacting with another component in a local system, distributed system, or across a network such as the Internet with other systems by way of the signal). Additionally, components or modules of systems described herein can be rearranged, or complemented by additional components/modules/systems in order to facilitate achieving the various aspects, goals, advantages, *etc.,* described with regard thereto, and are not limited to the precise configurations set forth in a given figure, as will be appreciated by one skilled in the art.

Furthermore, various aspects are described herein in connection with a UT. A UT can also be called a system, a subscriber unit, a subscriber station, mobile station, mobile, mobile communication device, mobile device, remote station, remote terminal, access terminal (AT), user agent (UA), a user device, or user equipment (UE). A subscriber station can be a cellular telephone, a cordless telephone, a Session Initiation Protocol (SIP) phone, a wireless local loop (WLL) station, a personal digital assistant (PDA), a handheld device having wireless connection capability, or other processing device connected to a wireless modem or similar mechanism facilitating wireless communication with a processing device.

In one or more exemplary embodiments, the functions described can be implemented in hardware, software, firmware, middleware, microcode, or any suitable combination thereof. If implemented in software, the functions can be stored on or transmitted over as one or more instructions or code on a computer-readable medium. Computer-readable media includes both computer storage media and communication media including any medium that facilitates transfer of a computer program from one place to another. A storage media may be any physical media that can be accessed by a computer. By way of example, and not limitation, such computer storage media can comprise RAM, ROM, EEPROM, CD-ROM or other optical disk storage, magnetic disk storage or other magnetic storage devices, smart cards, and flash memory devices *(e.g.,* card, stick, key drive...), or any other medium that can be used to carry or store desired program code in the form of instructions or data structures and that can be accessed by a computer. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

For a hardware implementation, the processing units' various illustrative logics, logical blocks, modules, and circuits described in connection with the aspects disclosed herein can be implemented or performed within one or more ASICs, DSPs., DSPDs, PLDs, FPGAs, discrete gate or transistor logic, discrete hardware components, general purpose processors, controllers, micro-controllers, microprocessors, other electronic units designed to perform the functions described herein, or a combination thereof. A general-purpose processor can be a microprocessor, but, in the alternative, the processor can be any conventional processor, controller, microcontroller, or state machine. A processor can also be implemented as a combination of computing devices, *e*.*g*., a combination of a DSP and a microprocessor, a plurality of microprocessors, one or more microprocessors in conjunction with a DSP core, or any other suitable configuration. Additionally, at least one processor can comprise one or more modules operable to perform one or more of the steps and/or actions described herein.

Moreover, various aspects or features described herein can be implemented as a method, apparatus, or article of manufacture using standard programming and/or engineering techniques. Further, the steps and/or actions of a method or algorithm described in connection with the aspects disclosed herein can be embodied directly in hardware, in a software module executed by a processor, or in a combination of the two. Additionally, in some aspects, the steps or actions of a method or algorithm can reside as at least one or any combination or set of codes or instructions on a machine-readable medium, or computer-readable medium, which can be incorporated into a computer program product. The term "article of manufacture" as used herein is intended to encompass a computer program accessible from any suitable computer-readable device or media.

Additionally, the word "exemplary" is used herein to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an'' as used in this application and the appended claims should generally be construed to mean "one or more" unless specified otherwise or clear from context to be directed to a singular form.

Furthermore, as used herein, the terms to "infer" or "inference" refer generally to the process of reasoning about or inferring states of the system, environment, or user from a set of observations as captured *via* events, or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events, or data. Such inference results in the construction of new events or actions from a set of observed events and/or stored event data, whether or not the events are correlated in close temporal proximity, and whether the events and data come from one or several event and data sources.

What has been described above includes examples of aspects of the claimed subject matter. It is, of course, not possible to describe every conceivable combination of components or methodologies for purposes of describing the claimed subject matter, but one of ordinary skill in the art may recognize that many further combinations and permutations of the disclosed subject matter are possible. Accordingly, the disclosed subject matter is intended to embrace all such alterations, modifications and variations that fall within the spirit and scope of the appended claims. Furthermore, to the extent that the terms "includes," "has" or "having" are used in either the detailed description or the claims, such terms are intended to be inclusive in a manner similar to the term "comprising" as "comprising" is interpreted when employed as a transitional word in a claim.

### Further Examples

A method of wireless communication, comprising:
employing at least one communication processor at a wireless communication device (WCD) to execute instructions for multi-antenna communication, the instructions comprising:
   forming a wireless communication channel with a second wireless device;
   establishing a relay link over the channel to communicate a parameter, the parameter indexes an antenna of the WCD or the second wireless device to implement distributed multiple-antenna transmission or reception; and
employing memory at the WCD to store the parameter or the instructions.

Preferably further comprising employing the communication processor and parameter for computation of a multiple-antenna transmission stream.

Preferably the computation is implemented at the WCD and computation for a corresponding transmission stream is implemented at the second wireless device.

Preferably the relay link facilitates a multiple-input (MI), multiple-output (MO), or multiple-inputlmultiple-output (MIMO) wireless communication based on distributed processing at the WCD and second wireless device.

Preferably further comprising employing the communication processor and relay parameter to process a received stream for multiple-antenna reception, wherein processing for a corresponding received stream of multiple-antenna reception is implemented at the second wireless device.

Preferably wherein the wireless communication channel is an indirect link comprising at least one relay node between the WCD and second wireless device.

Preferably further comprising employing the indexing to select a wireless resource for the WCD to implement the transmission or reception.

Preferably further comprising employing the relay link in providing an index for the antenna of the second wireless device.

Preferably further comprising employing forward-error correction, error detection or feedback in providing the parameter over the relay link.

Preferably wherein indexing comprises establishing a role for the antenna in implementing the multiple-antenna transmission or reception.

Preferably wherein indexing comprises providing a distinct identifier for each transmit or receive antenna in a multi-terminal relay implementing the transmission or reception.

An apparatus for multiple-input or multiple-output wireless communication, comprising:
memory for storing processing instructions or parameters to implement distributed multiple-antenna communication;
an antenna for transmitting or receiving wireless data; and
a communication processor for executing the instructions based on the parameters to:
   form a wireless communication channel between the apparatus and a wireless device;
   convey a parameter for indexing the antenna or an antenna of the wireless device to facilitate distributed processing for the multiple-antenna communication.

Preferably wherein the communication processor employs the parameter to generate a transmission stream for the communication distinct from a corresponding transmission stream generated at the wireless device.

Preferably wherein the wireless device is a P-P partner of the apparatus, a fixed relay or a network access point.

Preferably wherein the instructions and distributed processing facilitate MI, MO, or MIMO communication employing antennas of the apparatus or wireless device.

Preferably wherein the communication processor employs the parameter to decode a received signal for multiple-antenna reception.

Preferably further comprising a security module that implements secure communication for the wireless communication channel.

Preferably further comprising a resource module that employs the parameter to select transmission or reception resources for the apparatus in conjunction with the distributed processing.

Preferably further comprising an error-correction module that provides reliability in conveying the parameter to the wireless device.

Preferably the error-correction module employs forward-error correction, error detection or feedback in providing the increased reliability.

Preferably further comprising a parsing module that establishes respective roles for respective antennas of the apparatus and the wireless device in implementing the multiple-antenna transmission or reception.

Preferably the parsing module provides a distinct identifier for the respective antennas, wherein:
respective identifiers are employed by the communication processor and a processor of the wireless device to implement respective processing instructions; and
the respective processing instructions are configured to coordinate MI, MO or MIMO communication across multiple wireless antennas.

An apparatus for wireless communication, comprising:
means for employing at least one communication processor to execute the following components of a WCD:
   means for forming a wireless communication channel with a wireless device;
   means for establishing a relay link over the channel to convey a parameter, the parameter indexes an antenna of the WCD or the wireless device to implement distributed multiple-antenna transmission or reception; and
means for storing the parameter or the instructions.

Preferably further comprising means for employing the communication processor and parameter to at least one of:
compute a stream of a multiple-antenna transmission distinct from a corresponding stream computed at the wireless device; or
process a received stream of multiple-antenna reception distinct from a corresponding stream processed at the wireless device.

A processor configured for wireless communication, comprising:
a first module for forming a wireless communication channel with a wireless device;
a second module for establishing a relay link over the channel to communicate a parameter, the parameter indexes an antenna associated with the processor or an antenna of the wireless device to implement distributed multiple-antenna transmission or reception; and
a third module for storing the parameter or the instructions in memory.

Preferably further comprising a third module for employing the relay parameter to at least one of:
compute a stream of a multiple-antenna transmission distinct from a corresponding stream computed at the wireless device; or
process a received stream of multiple-antenna reception distinct from a corresponding stream processed at the wireless device.

A computer program product, comprising:
a computer-readable medium, comprising:
   a first set of codes for causing a computer to form a wireless communication channel with a wireless device;
   a second set of codes for causing the computer to establish a relay link over the channel to convey a parameter, the parameter indexes an antenna associated with the computer or with the wireless device to implement distributed multiple-antenna transmission or reception; and
   a third set of codes for causing the computer to store the parameter or the instructions.

Preferably further comprising a second set of codes for causing the computer to employ the communication processor and relay parameter to at least one of:
compute a stream of a multiple-antenna transmission distinct from a corresponding stream of the transmission computed at the wireless device; or
process a received stream of multiple-antenna reception distinct from a corresponding stream of the reception processed at the wireless device.

## Claims

1. A method for facilitating multiple-antenna wireless communication, comprising:
employing a wired or wireless communication interface to obtain data identifying a WCD and a potential wireless partner of the WCD;
employing a processor to generate indexing parameters facilitating distributed processing for multiple-antenna communication for the WCD or wireless partner; and
employing the communication interface to forward the indexing parameters to the WCD.

2. The method of claim 1, further comprising associating respective indexing parameters with respective sets of instructions for implementing the multiple-antenna communication at the WCD or wireless partner.

3. The method of claim 2, wherein an indexing parameter assigned to the WCD or wireless partner identifies a set of the instructions to be employed by the WCD or wireless partner for the communication.

4. The method of claim 1, further comprising identifying a wireless channel for the WCD and wireless partner to exchange data for the multiple-antenna communication.

5. The method of claim 1, wherein the indexing parameters establish respective roles for the WCD and wireless partner in implementing the multiple-antenna communication.

6. An apparatus for facilitating multiple-antenna wireless communication, comprising:
a communication interface that obtains a message that identifies a WCD and a potential wireless partner of the WCD; and
a distributed control module that generates indexing parameters facilitating distributed processing for multiple-antenna communication for the WCD and wireless partner, the apparatus employs the communication interface to transmit the indexing parameters to the WCD or wireless partner.

7. The apparatus of claim 6, the distributed control module associates respective indexing parameters with respective sets of instructions for implementing the multiple-stream communication at the WCD or wireless partner.

8. The apparatus of claim 7, wherein an indexing parameter assigned to the WCD identifies a set of the instructions to be employed by the WCD for the communication.

9. The apparatus of claim 6, further comprising a resource module that identifies a wireless channel for data exchange between the WCD and wireless partner in implementing the multiple-antenna communication, the WCD is a user terminal (UT).

10. The apparatus of claim 6, wherein the indexing parameters establish respective roles for the WCD and wireless partner in implementing the multiple-antenna communication.

11. The apparatus of claim 6, wherein the wireless partner is a UT, a network access point, or a wireless relay.

12. A computer program product, comprising:
a computer-readable medium, comprising:
a first set of codes for causing a computer to obtain data identifying a WCD and a potential wireless partner of the WCD;
a second set of codes for causing the computer to generate indexing parameters facilitating distributed processing for multiple-antenna communication for the WCD or wireless partner; and
a third set of codes for causing the computer to forward the indexing parameters to the WCD.

13. The computer program product of claim 12, wherein an indexing parameter assigned to the WCD identifies a set of the instructions to be employed by the WCD for the communication.
